# EUROPEAN PATENT APPLICATION

(11) **EP 2 852 034 A1**
(43) Date of publication of application: **25.03.2015**
(21) Application number: 13185350.9
(22) Date of filing: 20.09.2013
(51) Int. Cl.: H02K 3/48, H02K 15/00

(54) **Rotor of an electric machine, electric machine and method for manufacturing a rotor**

(71) Applicant: Siemens Aktiengesellschaft, 80333 München (DE)
(72) Inventor: Krompasky, Erik, 13583 Berlin-Spandau (DE); Redr, Jan, 14700 Praha 4 (CZ); Roubal, Jan, 190 Praha 16 (CZ)

(57) **Abstract**

The invention relates to a rotor (2) of an electric machine. A new, improved rotor design for the rotor is provided, comprising:
- a cylindrically shaped rotor body (4) including a plurality of longitudinal slots (6) distributed around its periphery, the slots having a slot bottom (25), a slot opening (22) and two side walls (24, 26) and the side walls (24, 26) at least partially converging from said slot bottom (25) to said slot opening (22) at a convergence angle (K),
- a plurality of rotor windings (8), each located in one of the plurality of longitudinal slots (6) and each comprising a first end (12) and a second end (14) projecting from the rotor body (4),
- a first end ring (16) and a second end ring (18) at each end of the rotor body (4), the first end ring (16) connecting the first ends (12) of the rotor windings (8) and the second end ring (18) connecting the second ends (14) of the rotor windings (8), and
- fixing means (34, 36) in the longitudinal slots (6) pressing the rotor windings (8) against the side walls (24, 26) and/or the slot bottom (25).

## Description

The present invention generally relates to a rotor of an electric machine. The invention further relates to an electric machine and a method for manufacturing a rotor of an electric machine.

An electric machine such as induction motor transforms electric power to mechanical torque by inducing rotating magnetic fields between a static element, i.e., a stator, and a rotatable element, i.e., a rotor. The rotating magnetic fields generate torque on a shaft coupled to the rotor through conductor bars. Known stators induce current flows through conductor bars on the rotor that are preferably parallel to an axis of rotation of the rotor.

One such electric-powered machine is described in US 2013/0020899 A1. The rotor core of the induction motor includes a cylindrically shaped steel laminate stack having a plurality of longitudinal grooves or slots distributed around the periphery of the steel laminate stack. A plurality of conductor bars are each located in one of the plurality of longitudinal grooves and each includes a first end projecting from a first end of the steel laminate stack. A shorting end ring includes a plurality of grooves aligned with and mated to the first ends of the conductor bars. The shorting end ring is affixed to the rotor core assembly by a lock ring assembled when at a thermally expanded condition to the rotor core when at a thermally contracted condition.

Regarding the cage construction of an induction motor there are open slot cast rotor cages, closed slot cast rotor cages as well as uninsulated and insulated bar rotor cages. All these constructions have some risk factor regarding air gap sparkling. Most used rotor cage for machines with small rotor diameters is the closed slot cast rotor cage which requires difficult technological process and equipment, but has the best safety characteristics. For large machines with power over 200 kW per pole, which cannot be manufactured with casted rotor cage because of technological limitations, most of the manufacturers use open slot cast rotor cage.

An aim of the present invention is to provide a new, improved rotor design for a rotor of an electric machine.

Another aim of the present invention is to provide an electric machine with such a rotor.

Yet another aim of the present invention is to provide a method for manufacturing such a rotor of an electric machine.

In accordance with the first-mentioned aim, a rotor of an electric machine is provided, comprising:
- a cylindrically shaped rotor body including a plurality of longitudinal slots distributed around its periphery, the slots having a slot bottom, a slot opening and two side walls and the side walls at least partially converging from said slot bottom to said slot opening at a convergence angle,
- a plurality of rotor windings, each located in one of the plurality of longitudinal slots and each comprising a first end and a second end projecting from the rotor body,
- a first end ring and a second end ring at each end of the rotor body, the first end ring connecting the first ends of the rotor windings and the second end ring connecting the second ends of the rotor windings, and
- fixing means in the longitudinal slots pressing the rotor windings against the side walls and/or the slot bottom.

Further, in accordance with the second aim an electric machine with such a rotor is provided.

In accordance with the third aim a method for manufacturing a rotor of an electric machine is provided, comprising the steps of:
- providing a cylindrically shaped rotor body including a plurality of longitudinal slots distributed round its periphery, the slots having a slot bottom, a slot opening and two side walls at least partially converging from said slot bottom to said slot opening at a convergence angle,
- inserting a plurality of rotor windings, in the plurality of longitudinal slots and the rotor windings comprising a first end and a second end projecting from the rotor body,
- inserting fixing means to press the rotor windings against the side walls or the slot bottom, and
- installing a first end ring and a second end ring at each end of the rotor body by connecting the first end ring to the first ends of the rotor windings and connecting the second end ring to the second ends of the rotor windings.

The rotor body means a steel laminated stack or a massive body made of one solid steel part.

The term rotor winding is understood to mean bars formed in one piece or alternatively a plurality of isolated conductors inserted in each slots.

The idea of the present invention is to secure the rotor windings in the slots by modifying the shape of the slots to create a form closure between the side walls of the slots and/or the slot bottom and the rotor windings. Here, at least part of the side walls of the slots is inclined at an angle to each other. When the rotor windings are placed in one of the slots and are still not fixed, thus the rotor windings have a certain degree of motion tolerance, yet, because of the inclination of the side walls they cannot be pressed out of the slot openings in the radial direction.

First, the rotor windings are inserted axially into the slots followed by the fixing means. After the fixing means are also placed in the longitudinal channel they exert a radial force on the rotor windings pressing them against the inclined side walls of the slots. The described construction of the rotor of an electric machine is suitable for all types of induction machines. The major advantages of this construction are that there are no limitations regarding the rotor dimensions (i.e. rotor length and rotor diameter) as well as that this solution can be used for high power ratings and at the meantime its potential air gap sparking is comparable with that of casted cages. Moreover, a damaged rotor bar can be replaced with little effort during the machine life time. It is also possible to change the machine parameters by changing the material of the rotor windings during the life time of the electric machine.

Preferably the fixing means are inserted in a longitudinal channel on each slot bottom and the fixing means press the rotor windings against the side walls. This construction enables a form closure between the side walls of the slots and the rotor windings pressed against the side walls.

In one preferred embodiment in cross section the rotor windings have a converging part. In order to establish a secure form closure preferably said converging part of the rotor windings has the same convergence angle as the side walls.

According to a further preferred embodiment the fixing means include at least two wedges inserted in each longitudinal channel. During manufacturing of the rotor after all rotor windings are inserted into the slots, they are fixed on the bottom with the two wedges in each longitudinal channel. The wedges are pressed, in particular hammered, against each other. The wedges can be inserted axially from two opposite directions of the longitudinal channel or one by one from the same side of the longitudinal channel and then pressed against each other. The wedges are eventually fixed against moving by welding or another suitable fixing method.

Preferably, the surface of the rotor windings is covered with an insulating material with relevant mechanical, thermal and electrical properties.

Further characteristics and advantages of the present invention will emerge clearly from the description of its non-limiting examples of embodiment, with reference to the figures of the annexed drawing, wherein:
- FIG 1: shows a radial cut view through a rotor of an electric machine,
- FIG 2: shows a cross section view of a slot in the rotor according to FIG 1,
- FIG 3: shows the slot from FIG 2 with a conductor bar inserted in it, and
- FIG 4: shows the slot with a conductor bar according to FIG 3 including fixing means to fix the conductor bar.

The same features are noted in the figures by the same reference signs.

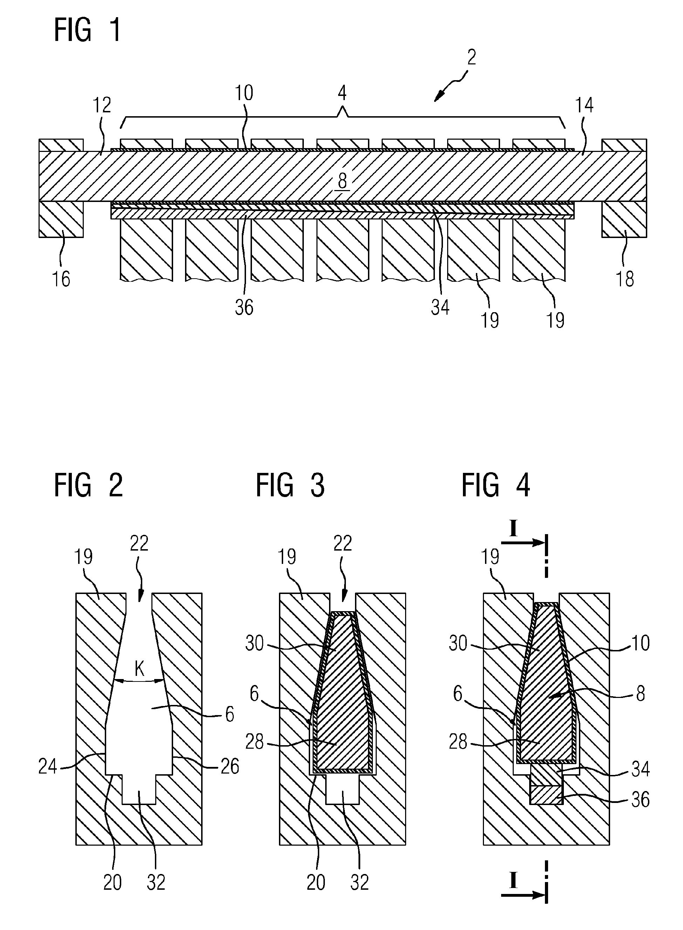

With reference to FIG 1 designated by the number 2 is a rotor of an electric machine. The electric machine is not explicitly shown in this drawing. The electric machine comprises further a stator interacting with the rotor 2 during operation of the electric machine.

The rotor 2 comprises a cylindrical rotor body 4 shaped as steel laminate stack, including a plurality of longitudinal slots 6 (see figures 2, 3, and 4). The slots 6 are distributed around the periphery of the steel laminated stack 4. Rotor windings 8 formed as a one-piece conductor bars 8 covered with an insulating material 10 are inserted in each of the slots 6 in the axial/longitudinal direction. One such conductor bar 8 stretching across the steel laminated stack 4 is shown in FIG 1.

The conductor bar 8 according to FIG 1 comprises a first end 12 and a second end 14 projecting axially from the steel laminate stack 4.

A first end ring 16 and a second end ring 18 are attached to the first end 12 and respectively to the second end 14 of the conductor bars 8 to prevent axial movement of the conductor bar 8.

FIG 2, FIG 3 and FIG 4 show a cross section of a steel laminate 19 with a slot 6 notched in the material of the laminate 19. FIG 1 shows a cross section view along the line I-I in FIG 4. Each slot 6 comprises a slot bottom 20, a slot opening 22 and two side walls 24, 26 converging from the slot bottom 20 to the slot opening 22 at a convergence angle K.

In a first section from the bottom 20 to the opening 22 the side walls 24, 26 are approximately parallel to each other. Only in a second section which corresponds to the upper 2/3 of the height of the slots 6 the side walls 24, 26 are inclined to each other forming the convergence angle K.

Following the shape of the slots 6 the conductor bars 8 comprise a lower part 28 having a rectangular cross section and an upper part 30 having a trapezoid cross section. This way the upper part 30 forms a converging part with the same convergence angle K as the side walls 24, 26.

Furthermore, on the bottom 20 of each slot 6 a longitudinal channel 32 is provided, in which two wedges 34, 36 are located to fix the conductor bar 8 in the radial direction.

The assembly of the rotor 2 is done in a few steps. In a first step the conductor bars 8 are threat through the slots 6. This step is shown in FIG 3, where the conductor bar 8 can move freely in the rotor slot 6 which allows an easy treating of the conductor bars 8. Next, the conductor bars 8 are fixed against radial motion with the two wedges 34, 36 hammered against each other. The wedges 34, 36 are fixed against slipping out of the channel 32 for instance by welding.

In a last step the first end ring 16 and the second end ring 18 are installed at each end of the steel laminate stack 4 by connecting the first end ring 16 to the first end 12 and connecting the second end ring 18 to the second end 14 of each conductor bar 8.

A rotor 2 constructed in the above-mentioned manner enables a simple manufacturing process characterized by high technological safety.

## Claims

1. A rotor (2) of an electric machine comprising:
- a cylindrically shaped rotor body (4) including a plurality of longitudinal slots (6) distributed around its periphery, the slots having a slot bottom (25), a slot opening (22) and two side walls (24, 26) and the side walls (24, 26) at least partially converging from said slot bottom (25) to said slot opening (22) at a convergence angle (K),
- a plurality of rotor windings (8), each located in one of the plurality of longitudinal slots (6) and each comprising a first end (12) and a second end (14) projecting from the rotor body (4),
- a first end ring (16) and a second end ring (18) at each end of the rotor body (4), the first end ring (16) connecting the first ends (12) of the rotor windings (8) and the second end ring (18) connecting the second ends (14) of the rotor windings (8), and
- fixing means (34, 36) in the longitudinal slots (6) pressing the rotor windings (8) against the side walls (24, 26) and/or the slot bottom (25).

2. A rotor (2) according to claim 1,
wherein the fixing means (34, 36) are inserted in a longitudinal channel (32) on each slot bottom (20) and the fixing means (34, 36) press the rotor windings (8) against the side walls (24, 26).

3. A rotor (2) according to claim 1 or 2,
wherein in cross section the conductor bars (8) have a converging part (30).

4. A rotor (2) according to claim 3,
wherein the converging part (30) has the same convergence angle (K) as the side walls (24, 26).

5. A rotor (2) according to according to one of the claims 2 to 4,
wherein the fixing means (34, 36) include at least two wedges inserted in each longitudinal channel (32).

6. A rotor (2) according to according to one of the preceding claims,
wherein the surface of the rotor windings (8) is covered with an insulating material (10).

7. An electric machine with a rotor (2) according to one of the preceding claims.

8. A method for manufacturing a rotor (2) of an electric machine comprising the steps of:
- providing a cylindrically shaped rotor body (4) including a plurality of longitudinal slots (6) distributed round its periphery, the slots having a slot bottom (20), a slot opening (22) and two side walls (24, 26) at least partially converging from said slot bottom (20) to said slot opening (22) at a convergence angle (K),
- inserting a plurality of rotor windings (8), in the plurality of longitudinal slots (6) and the rotor windings (8) comprising a first end (12) and a second end (14) projecting from the rotor body (4),
- inserting fixing means (34, 36) to press the rotor windings (8) against the side walls (24, 26) or the slot bottom (20), and
- installing a first end ring (16) and a second end ring (18) at each end of the rotor body (4) by connecting the first end ring (16) to the first ends (12) of the rotor windings (8) and connecting the second end ring (18) to the second ends (14) of the rotor windings (8).
